# EUROPÄISCHE PATENTSCHRIFT

(11) **EP 1 816 037 B1**
(45) Veröffentlichungstag und Bekanntmachung des Hinweises auf die Patenterteilung: **30.09.2009**
(21) Anmeldenummer: 07100167.1
(22) Anmeldetag: 05.01.2007
(51) Int. Cl.: B60R 19/48, G01S 15/93, C09C 1/34

(54) **Sensorvorrichtung für Fahrzeuge**
Sensor device for vehicles
Dispositif de détection pour véhicules

(30) Priorität: 03.02.2006 DE 102006004874
(43) Veröffentlichungstag der Anmeldung: 08.08.2007
(73) Patentinhaber: ROBERT BOSCH GMBH, 70442 Stuttgart (DE)
(72) Erfinder: Schaaf, Gunther, 70806, Kornwestheim (DE); Janke, Nils, 71636, Ludwigsburg (DE)

(56) Entgegenhaltungen:
- EP-A- 1 431 957
- WO-A-02/12027
- US-A- 4 893 856
- US-A- 6 132 662

## Beschreibung

### Stand der Technik

Die vorliegende Erfindung betrifft eine Sensorvorrichtung für Fahrzeuge, ein dafür geeignetes Montageverfahren sowie eine Sensorabdeckung für eine derartige Sensorvorrichtung. Die Sensorvorrichtung umfasst einen Ultraschallsensor und eine Sensorabdeckung in Form einer Folie, wobei der Ultraschallsensor von einer Ausnehmung oder Bohrung eines Fahrzeug-Außenteils aufgenommen werden kann und ein schwingfähiges Sensorelement aufweist, das innerhalb eines Gehäuses des Ultraschallsensors gehaltert ist und wobei das Sensorelement und das Gehäuse durch die Sensorabdeckung nach außen abdeckbar ist.

Derartige Sensorvorrichtungen werden insbesondere bei Kraftfahrzeugen zur Unterstützung des Fahrers beim Rangieren oder Einparken des Kraftfahrzeugs im Rahmen von als "Park Distance Controll" (PDC) bezeichneten Fahrerassistenzsystemen eingesetzt. Diese PDC-Systeme arbeiten mit Ultraschall-Abstandsmesseinrichtungen, die üblicherweise entweder nur im Heckbereich oder im Heckbereich sowie im Frontbereich des Fahrzeugs angeordnet sind. Dabei wird der Abstand zu naheliegenden Gegenständen, insbesondere der hinter dem Fahrzeug verbleibende Freiraum gemessen und eine optische und/oder akustische Signaleinheit gibt dazu ein vom gemessenen Abstand abhängiges Signal ab. So kann der Abstand z.B. mittels verschiedenfarbiger Leuchtdioden angezeigt und/oder durch einen Intervall-Ton signalisiert werden, wobei eine Verkürzung der Intervalle eine Verringerung des verbleibenden Abstandes bedeutet.

Eine Sensorvorrichtung der eingangsgenannten Art ist aus der DE 44 10 895 A1 bekannt. Vorgeschlagen wird dort insbesondere ein Verfahren bzw. eine Vorrichtung zum verdeckten Einbau eines Sensors in ein Kraftfahrzeug-Außenteil, insbesondere in einen Stoßfänger. Dazu wird eine Abdeckung aufgesetzt, die formschlüssig an die äußere Kontur des Kraftfahrzeug-Außenteils angepasst ist und die das Kraftfahrzeug-Außenteil vollständig, zumindest jedoch an der Stelle abdeckt, an der sich der Sensor befindet, so dass das Fahrzeugdesign durch den verdeckten Einbau des Sensors nicht gestört wird. Insbesondere wird auf das Material der Abdeckung, die auch durch eine entsprechend stabile Folie gebildet sein kann, eingegangen. So ist gemäß der DE 44 10 895 A1 für die Abdeckung eine ausreichende Härte bzw. Steifigkeit sicherzustellen, damit die Signale des Ultraschallsensors eine möglichst geringe Dämpfung erfahren und der Sensor vor Beschädigungen durch äußere mechanische Einwirkungen zuverlässig geschützt wird.

Ferner offenbart die DE 29614 691 U1 einen Ultraschallsensor, dessen Gehäuse in Form eines stirnseitig offenen Sensortopfes mit einer radial nach innen vorspringenden Ringkante abschließt. An der Ringkante liegt von innen abstrahlungsseitig eine Teflonfolie an, die durch eine Innenhülse über eine in das Gehäuse eingeschraubte Innenschraube gegen die Ringkante gepresst wird. Die Teflonfolie deckt dabei lediglich das schwingfähige Sensorelement ab, um dieses auch in einer aggressiven Atmosphäre einsetzen zu können. Das Gehäuse des Sensors ist nicht abgedeckt.

Aus der EP 1 431 957 A2 ist ein Ultraschallsensor und ein Herstellungsverfahren bekannt. Der Ultraschallsensor weist ein Gehäuse mit einer topfartig ausgebildeten Membran auf, die einen Membranboden zum Senden und/oder Empfangen von Signalen aufweist. Zwischen dem Gehäuse und der Membran ist ein Entkopplungsmedium angeordnet. Die Membran und das Entkopplungsmedium sind von einem zusätzlichen, folienartiges Medium abgedeckt, um ein Eindringen von Feuchtigkeit zwischen der Membran und dem Entkopplungsmedium zu verhindern. Das folienartige Medium kann grundiert oder lackiert werden.

Aus der WO 02/12027 A1 ist ein Ultraschallwandler/Sensor zum Einbauen in einem Stoßfänger eines Kraftfahrzeugs bekannt. Der Ultraschallwandler ist mit einem Entkopplungsring versehen und durch eine Öffnung im Stoßfänger bündig mit der Außenseite des Stoßfängers eingesetzt. Der Ultraschallwandler ist mit dem Entkopplungsring auf seiner, dem Stoßfänger zugewandten Seite mit einer Abdeckung aus einer dünnen Folie überzogen.

Aus der US 6,132,662 ist ein folienbedecktes Plastikbauteil bekannt, bei dem nur ein Teil der Oberfläche mit einer dekorativen Folie überzogen wird.

Insbesondere für Fahrzeuge der Oberklasse ist es oftmals erwünscht, bestimmte Fahrzeug-Außenteile chromfarben zu gestalten, etwa indem das verwendete Material einen hohen Chromanteil aufweist, gänzlich aus Chrom besteht oder mit einer Chromschicht überzogen ist. Zu diesen chromfarbenen Fahrzeug-Außenteilen gehören beispielsweise Stoßfänger oder Stoßstangen. Da Ultraschallsensoren für Einparkhilfen besonders in der Oberklasse inzwischen meist zur Standardausstattung gehören, möchte man diese auch in chromfarbene Fahrzeug-Außenteile montieren. Dabei soll auch hier der Ultraschallsensor vor allem aus ästhetischen Gründen möglichst wenig hervortreten. Für einen verdeckten bzw. möglichst unauffälligen Einbau innerhalb der chromfarbenen Fahrzeug-Außenteile werden die Sensoren deshalb grundiert und chromiert und auf diese Weise chromfarben gestaltet (galvanische Beschichtung).

Allerdings führt diese Vorgehensweise zu dem großen Nachteil, dass sich die mechanischen Eigenschaften der äußeren schwingenden Membran des Ultraschallsensors durch einen veränderten E-Modul und eine veränderte Dämpfung stark verschlechtern. Insbesondere stellt es dabei ein Problem dar, dass die Schichtdicke der Grundierungs- bzw. Chromschicht variieren kann, wodurch die Signalcharakteristik des Ultraschallsensors ebenfalls unerwünscht und unterschiedlich stark variiert. Selbst wenn die Variation der Schichtdicke relativ gering gehalten werden kann, führt sie aufgrund des sehr engen Frequenzbandes, in dem das Sensorelemente arbeitet, dennoch zu relativ großen und vor allem nicht vorhersagbaren Abweichungen.

Die aufgebrachte Chromschicht verändert die strukturmechanischen Eigenschaften des Sensors außerdem in der Weise, dass sie dessen Steifigkeit und somit auch die Eigenschwingfrequenz erhöht. Obwohl die aufgebrachte Masse der Grundierung und der Chromschicht zu einer Reduzierung der Eigenschwingfrequenz führt, wird dieser Effekt durch die Aufbringung des vergleichsweise harten Chrommaterials überkompensiert, so dass insgesamt eine Erhöhung der Eigenschwingfrequenz des Gehäuses in Form des Sensortopfes oder Membrantopfes erreicht wird und somit auch die Sendefrequenz erhöht wird. Der Sensor wird dadurch verstimmt. Diese Erhöhung der Sendefrequenz muss in einem weiteren Bearbeitungsschritt durch eine zusätzliche Bearbeitung des Membrantopfes kompensiert werden, etwa indem man schon vor der Beschichtung durch spanabhebende Bearbeitung die Schichtdicke des Sensorelementes, insbesondere seiner Membran, verringert.

Aufgabe der vorliegenden Erfindung ist es, eine Sensorvorrichtung vorzuschlagen, die einerseits optisch an chromfarbene Fahrzeug-Außenteile angepasst ist und die andererseits den für diese Anpassung erforderlichen Bearbeitungsaufwand reduziert. Vor allem jedoch sollen die Änderungen der mechanischen Eigenschaften der Sensorvorrichtung, die mit der optische Anpassung an chromfarbene Fahrzeug-Außenteile einhergehen, verringert, zumindest aber in voraussagbaren und gegenüber dem Stand der Technik engeren Grenzen gehalten werden. Gleichfalls ist es Aufgabe der Erfindung, ein Montageverfahren anzugeben, welches es gestattet, die erfindungsgemäße Sensorvorrichtung auf besonders einfache Weise im Fahrzeug-Außenteil zu montieren.

### Vorteile der Erfindung

Die erfindungsgemäße Sensorvorrichtung gemäß Anspruch 1 weist gegenüber allen bekannten Ausführungsformen den Vorteil auf, dass sie nicht nur eine hervorragende optische Anpassung an chromfarbene bzw. verchromte Fahrzeug-Außenteile bietet, sondern gleichzeitig auch nur mit einer äußerst geringen Verstimmung des Ultraschallsensors einhergeht. So kann mit einer besonders einfachen Konstruktion und mit besonders geringem herstellungstechnischem Aufwand auf kostengünstige Weise eine optimale Funktion des Ultraschallsensors erreicht werden.

Die der vorliegenden Erfindung zugrundeliegende Idee besteht darin, dass die Sensorabdeckung unmittelbar an dem Ultraschallsensor befestigbar ist, dass die Sensorabdeckung eine zumindest im wesentlichen ebene Fläche ausbildet, deren Umriss dem Umriss der Stirnfläche des Gehäuses angepasst ist und die im wesentlichen flächenbündig mit der Stirnfläche der Gehäuses des Ultraschallsensors zusammenfällt, und dass die Sensorabdeckung Licht mit einem Farbspektrum im Bereich des Chromfarbenen und mit einem Reflexionsvermögen im Bereich von poliertem Chrom reflektiert.

Die Verwendung von Chromfolie zur Abdeckung des Ultraschallsensors bringt eine sehr gute optische Anpassung an chromfarbene und verchromte Fahrzeug-Außenteile. Das Problem der Sensorverstimmung, d.h. der Heraufsetzung der Resonanzfrequenz des Ultraschallsensors tritt bei Verwendung der Chromfolie überraschenderweise nicht auf. Insgesamt ist die Chromfolie dünn genug, um die mechanischen Eigenschaften des Ultraschallsensors nicht wesentlich zu verändern. Zwar werden die mechanischen Eigenschaften des Sensors geringfügig geändert, insbesondere die Eigenschwingfrequenz des Gehäuses bzw. des Membrantopfes herabgesetzt und somit die Sendefrequenz des Sensors herabgesetzt sowie das Nachschwingverhalten unwesentlich beeinflusst, da die Chromfolie grundsätzlich dämpfend wirkt. Jedoch sind die genannten Änderungen der mechanischen Eigenschaften gegenüber der Bearbeitung/Verdeckung mittels Verchromung gering und vor allem voraussagbar und dadurch besser behebbar.

Obwohl die erfindungsgemäße Folie in erster Linie der optischen Anpassung an die Umgebung des chromfarbenen Einbauortes dient, kann sie gleichzeitig auch einen Korrosionsschutz bewirken.

In dieser Anmeldung bezieht sich "Chromfolie" auf alle Folien, die optisch einer verchromten Oberfläche angepasst sind. Dies kann durch die Verwendung einer Teilschicht der Folie aus Chrom erreicht werden. Bekannt sind allerdings auch Kunststofffolien, die einen metallischen Glanz besitzen, ohne dabei ein Metall, insbesondere Chrom, zu enthalten. Auch diese Folientypen sind vom Begriff "Chromfolie" mit umfasst. "Chromfarben" ist eine Folie dann, wenn sie ein Farbspektrum im Bereich des Chromfarbenen und ein Reflexionsvermögen im Bereich von poliertem Chrom hat, also die wesentlichen optischen Eigenschaften einer polierten verchromten Metallfläche aufweist.

Insbesondere die Anpassung des Folienumrisses an die Form der Stirnseite des Sensors, also der Seite, die bei Blick auf das Fahrzeug-Außenteil zu sehen ist, ermöglicht ein Anbringen der Folie wahlweise schon vor oder erst nach Montage des Ultraschallsensors am Fahrzeug oder am Fahrzeug-Außenteil, da die Folie nicht über den unmittelbaren Einbauort, d.h. über den Öffnungsquerschnitt der Ausnehmung oder der Bohrung des Fahrzeugteils hinausragt.

Vorteilhafte Weiterbildungen und Verbesserungen der erfindungsgemäßen Sensorvorrichtung ergeben sich aus den abhängigen Ansprüchen.

Eine optisch besonders unauffällige Ausführungsform kann dadurch erreicht werden, dass der Umriss der ebenen Fläche der Sensorabdeckung identisch mit dem Umriss der Stirnfläche des Gehäuses bzw. Sensortopfes zusammenfällt.

Gemäß einer besonders bevorzugten Ausführungsform der Sensorvorrichtung ist vorgesehen, dass die Sensorabdeckung an dem Ultraschallsensor stoffschlüssig befestigt ist. Vorzugsweise ist die Sensorabdeckung auf den Ultraschallsensor aufgeklebt.

Eine besonders geringe Veränderung der mechanischen Eigenschaften des Ultraschallsensors kann dadurch erreicht werden, dass die Sensorabdeckung metallfrei ausgebildet ist und ausschließlich aus Kunststoff besteht.

Ferner können minimale Veränderungen der mechanischen Eigenschaften des Ultraschallsensors dann erzielt werden, wenn die Sensorabdeckung eine Dicke zwischen 10 µm und 600 µm, vorzugsweise zwischen 50 µm und 200 µm hat. Dennoch sind auch dickere Folien einsetzbar.

Besonders vorteilhaft ist es ferner, wenn zwischen der Sensorabdeckung und dem schwingfähigen Sensorelement des Ultraschallsensors ein Abstand ausgebildet ist. Dieser Abstand kann bei einem ringförmigen Gehäuse mit einer Öffnung in der Stirnwand des Sensortopfes frei bleiben oder bei einem Gehäuse in Form eines geschlossenen Sensortopfes durch die Dicke seiner Stirnwand ausgefüllt sein, die vorzugsweise im Bereich von 0,3 mm bis 1 mm liegen kann.

Gemäß einer weiteren besonders bevorzugten Ausführungsform der Sensorvorrichtung kann vorgesehen sein, dass der Ultraschallsensor von einer Ausnehmung oder Bohrung eines Fahrzeug-Außenteils derart aufgenommen wird, dass die Stirnfläche seines Gehäuses zumindest im wesentlichen flächenbündig mit dem Öffnungsquerschnitt der Ausnehmung oder der Bohrung zusammenfällt. Dadurch wird eine optisch besonders unauffällige Anordnung erreicht.

Die Montage der Abdeckung in Form der Folie kann vorzugsweise derart erfolgen, dass in einem ersten Schritt die Sensorabdeckung an dem Ultraschallsensor, insbesondere mittels Kleben, befestigt wird und in einem zweiten Schritt der Ultraschallsensor in die Ausnehmung oder Bohrung des Fahrzeug-Außenteils montiert wird. Alternativ kann in einem ersten Schritt der Ultraschallsensor in die Ausnehmung oder Bohrung des Fahrzeug-Außenteils montiert und in einem zweiten Schritt die Sensorabdeckung an den Ultraschallsensor geklebt werden.

### Zeichnungen

In den Zeichnungen sind Ausführungsbeispiele der Erfindung dargestellt, die in der nachfolgenden Beschreibung näher erläutert werden. Es zeigen:
Figur 1, eine perspektivische Teilansicht auf einen Stoßfänger mit einer erfindungsgemäßen Sensorvorrichtung;
Figur 2, ein Schnitt durch eine in einen Stoßfänger eingebaute Sensorvorrichtung;
Figur 3, ein Schnitt durch eine dritte erfindungsgemäße Sensorvorrichtung; und

Die in den Figuren gezeigte Sensorvorrichtung 1 besteht im wesentlichen aus einem Ultraschallsensor 2 und einer an diesen angeklebten und durch eine Chromfolie gebildeten Sensorabdeckung 3. Der Ultraschallsensor 2 selbst umfasst ein schwingfähiges Sensorelement 4, beispielsweise in Form einer Sensormembran, das innerhalb eines topfförmigen Gehäuses 5 des Ultraschallsensors 2 gehaltert ist.

Der Ultraschallsensor 2 ist derart in einer Bohrung 6 eines Fahrzeug-Außenteils 7 in Form eines Stoßfängers aufgenommen, dass die vordere Stirnwand 8 des Gehäuses 5 mit einer Dicke von 0,6 mm vollständig innerhalb der Bohrung 6 liegt. Dabei fällt die außenseitige Stirnfläche 9 des Gehäuses 5 flächenbündig mit dem Öffnungsquerschnitt der Bohrung 6 zusammen.

Direkt auf die Stirnfläche 9 ist die Chromfolie als Sensorabdeckung 3 aufgeklebt. Sie ist in Form und Größe an die Stirnfläche 9 angepasst. Insbesondere ragt die Chromfolie 3 so nicht über den von der Bohrung 6 gebildeten Öffnungsquerschnitt hinaus und deckt den Ultraschallsensor 2 vollständig nach außen hin ab.

Die Chromfolie 3 besteht hier aus mehreren Schichten. Sie umfasst eine Klebeschicht, mit der sie auf den Ultraschallsensor 2 geklebt ist, darüber eine Trägerschicht, eine Farbschicht und schließlich eine strapazierfähige, die Chromfolie 3 abschließende Deckschicht.

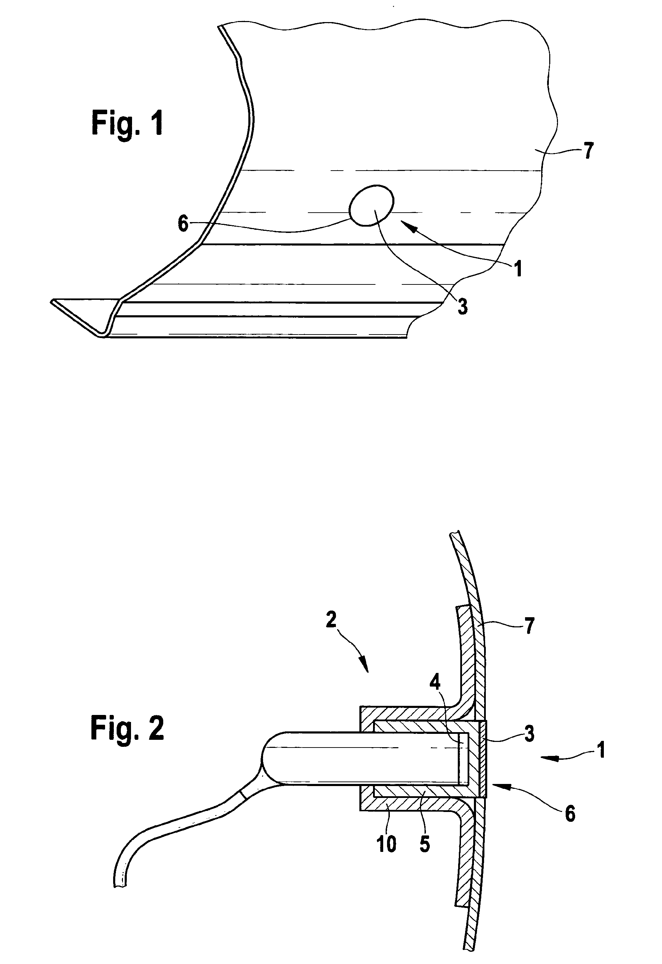

Figur 2 verdeutlicht die Befestigung der Sensorvorrichtung 1 am Stoßfänger 7 eines Kraftfahrzeugs. Dazu ist hier eine Schelle 10 mit einer Bohrung vorgesehen, in die die Sensorvorrichtung 1 durch nicht gezeigte Schnappverschlüsse formschlüssig befestigt ist. Die Schelle kann beispielsweise an den Stoßfänger angeschweißt sein.

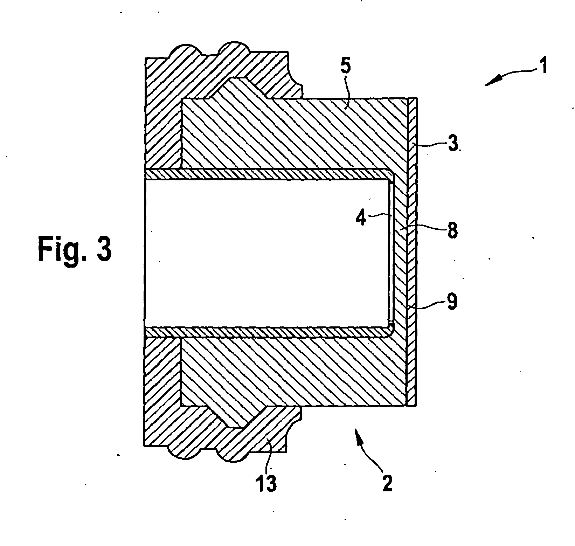

Während Figur 3 eine Sensorvorrichtung 1 zeigt, bei der die Chromfolie 3 exakt der Form und den Abmessungen der Stirnfläche 9 des durch einen Aluminiumtopf gebildeten Gehäuses 5 entspricht, ist in Figur 4 eine Fortbildung dargestellt, bei der die Chromfolie 3 den Sensortopf 5 deckelartig umschließt. Der ebenen Fläche der durch die Chromfolie gebildeten Sensorabdeckung 3 schließt sich dabei ein Randbereich 11 an, der an einen oberen Mantelabschnitt 12 des Sensortopfes des Ultraschallsensors 2 geklebt ist.

In Figur 3 ist das schwingfähige Sensorelement 4 durch eine Piezokeramik gebildet, die innenseitig auf die Stirnfläche 9 des Sensortopfes 5 aufgebracht ist. Weiterhin wird hier ein dichtendes und schwingungsentkoppeltes Element 13 gezeigt, das den Sensortopf 5 radial außen über seinen Außenumfang einfasst.

## Patentansprüche

1. Sensorvorrichtung (1), umfassend einen Ultraschallsensor (2) und eine Sensorabdeckung (3) in Form einer Folie, wobei der Ultraschallsensor (2) ein schwingfähiges Sensorelement (4) aufweist, das innerhalb eines eine Stirnfläche (9) aufweisenden Gehäuses (5) des Ultraschallsensors (2) angebracht ist, wobei der Ultraschallsensor (2) von einer Ausnehmung oder Bohrung (6) eines Fahrzeug-Außenteils (7) aufnehmbar ist, und wobei das Sensorelement (4) und das Gehäuse (5) durch die Sensorabdeckung (3) nach außen abdeckbar ist, wobei die Sensorabdeckung (3) unmittelbar an dem Ultraschallsensor (2) befestigbar ist, wobei die Sensorabdeckung (3) Licht mit einem Farbspektrum im Bereich des Chromfarbenen und mit einem Reflexionsvermögen im Bereich von poliertem Chrom reflektiert, **dadurch gekennzeichnet, dass** die Sensorabdeckung (3) eine zumindest im wesentlichen ebene Fläche ausbildet, deren Umriss dem Umriss der Stirnfläche (9) des Gehäuses (5) angepasst ist und die im wesentlichen flächenbündig mit der Stirnfläche (9) des Gehäuses (5) des Ultraschallsensors (2) zusammenfällt, wobei der Umriss der die Sensorabdeckung bildenden Folie (3) den Abmessungen und der Form der Stirnfläche (9) des Gehäuses (5) des Ultraschallsensors (2)entspricht.

2. Sensorvorrichtung (1) nach Anspruch 1, **dadurch gekennzeichnet, dass** die Sensorabdeckung (3) an dem Ultraschallsensor (2) stoffschlüssig befestigt, insbesondere angeklebt ist.

3. Sensorvorrichtung (1) nach einem der vorherigen Ansprüche, **dadurch gekennzeichnet, dass** die Sensorabdeckung (3) ausschließlich aus polymerem Material besteht.

4. Sensorvorrichtung (1) nach einem der vorherigen Ansprüche, **dadurch gekennzeichnet, dass** die Sensorabdeckung (3) eine Dicke im Bereich von 10 µm bis 600 µm, vorzugsweise von 50 µm bis 200 µm aufweist.

5. Sensorvorrichtung (1) nach einem der vorherigen Ansprüche, **dadurch gekennzeichnet, dass** zwischen der Sensorabdeckung (3) und dem schwingfähigen Sensorelement (4) des Ultraschallsensors (2) ein Abstand ausgebildet ist.

6. Sensorvorrichtung (1) nach einem der vorherigen Ansprüche, **dadurch gekennzeichnet, dass** der Ultraschallsensor (2) von einer Ausnehmung oder Bohrung (6) eines Fahrzeug-Außenteils (7) derart aufnehmbar ist, dass die Stirnfläche (9) des Gehäuses (5) zumindest im wesentlichen flächenbündig mit dem Öffnungsquerschnitt der Ausnehmung oder der Bohrung (6) zusammenfällt.

7. Verfahren zur Montage einer Sensorvorrichtung (1) gemäß einem der vorherigen Ansprüche an einem Fahrzeug-Außenteil (7), **dadurch gekennzeichnet, dass** in einem ersten Schritt die Sensorabdeckung (3) an dem Ultraschallsensor (2) insbesondere mittels Kleben befestigt wird, und dass in einem zweiten Schritt der Ultraschallsensor (2) in eine Ausnehmung oder Bohrung (6) des Fahrzeug-Außenteils (7) montiert wird, wobei die Sensorabdeckung (3) eine zumindest im wesentlichen ebene Fläche ausbildet, deren Umriss dem Umriss der Stirnfläche (9) des Gehäuses (5) angepasst ist und die im wesentlichen flächenbündig mit der Stirnfläche (9) des Gehäuses (5) des Ultraschallsensors (2) zusammenfällt, wobei der Umriss der die Sensorabdeckung bildenden Folie (3) den Abmessungen und der Form der Stirnfläche (9) des Gehäuses (5) des Ultraschallsensors (2) gewählt wird.

## Claims

1. Sensor device (1) comprising an ultrasonic sensor (2) and a sensor cover (3) in the form of a film, the ultrasonic sensor (2) having an oscillatory sensor element (4) which is fitted inside a housing (5) of the ultrasonic sensor (2), which housing has an end face (9), the ultrasonic sensor (2) being able to be received by a recess or hole (6) in a vehicle outer part (7), and the sensor element (4) and the housing (5) being able to be covered to the outside by the sensor cover (3), the sensor cover (3) being able to be directly fixed to the ultrasonic sensor (2), the sensor cover (3) reflecting light with a colour spectrum in the region of the colour of chrome and with a reflective power in the region of polished chrome, **characterized in that** the sensor cover (3) forms an at least essentially flat surface, the contour of which is matched to the contour of the end face (9) of the housing (5) and which coincides with the end face (9) of the housing (5) of the ultrasonic sensor (2) in a manner essentially flush with the surface, the contour of the film (3) which forms the sensor cover corresponding to the dimensions and the shape of the end face (9) of the housing (5) of the ultrasonic sensor (2).

2. Sensor device (1) according to Claim 1,
**characterized in that** the sensor cover (3) is cohesively fixed, in particular adhesively bonded, to the ultrasonic sensor (2).

3. Sensor device (1) according to one of the preceding claims, **characterized in that** the sensor cover (3) is composed solely of polymeric material.

4. Sensor device (1) according to one of the preceding claims, **characterized in that** the sensor cover (3) has a thickness in the range from 10 µm to 600 µm, preferably from 50 µm to 200 µm.

5. Sensor device (1) according to one of the preceding claims, **characterized in that** a clearance is formed between the sensor cover (3) and the oscillatory sensor element (4) of the ultrasonic sensor (2).

6. Sensor device (1) according to one of the preceding claims, **characterized in that** the ultrasonic sensor (2) can be received by a recess or hole (6) in a vehicle outer part (7) in such a manner that the end face (9) of the housing (5) coincides with the opening cross section of the recess or of the hole (6) at least in a manner essentially flush with the surface.

7. Method for mounting a sensor device (1) according to one of the preceding claims on a vehicle outer part (7), **characterized in that** the sensor cover (3) is fixed to the ultrasonic sensor (2), in particular by means of adhesive bonding, in a first step, and **in that** the ultrasonic sensor (2) is mounted in a recess or hole (6) in the vehicle outer part (7) in a second step, the sensor cover (3) forming an at least essentially flat surface, the contour of which is matched to the contour of the end face (9) of the housing (5) and which coincides with the end face (9) of the housing (5) of the ultrasonic sensor (2) in a manner essentially flush with the surface, the contour of the film (3) which forms the sensor cover being selected to correspond to the dimensions and the shape of the end face (9) of the housing (5) of the ultrasonic sensor (2).

## Revendications

1. Dispositif de détection (1) qui comprend une sonde à ultrasons (2) et un recouvrement de sonde (3) qui présente la forme d'une feuille,
la sonde à ultrasons (2) présentant un élément de sonde (4) capable d'osciller, installé à l'intérieur d'un boîtier (5) de la sonde à ultrasons (2) qui présente une surface frontale (9),
la sonde à ultrasons (2) pouvant être reçue dans une découpe ou un alésage (6) d'une pièce extérieure (7) d'un véhicule,
l'élément de sonde (4) et le boîtier (5) pouvant être recouverts sur le côté extérieur par le recouvrement de sonde (3),
le recouvrement de sonde (3) pouvant être fixé directement sur la sonde à ultrasons (2),
le recouvrement de sonde (3) réfléchissant la lumière dans un spectre coloré situé dans la plage des couleurs chromées et présentant une capacité de réflexion dans la plage du chrome poli,
**caractérisé en ce que**
le recouvrement de sonde (3) forme une surface au moins essentiellement plane dont le périmètre est adapté au périmètre de la surface frontale (9) du boîtier (5) et qui coïncide essentiellement à chant avec la surface frontale (9) du boîtier (5) de la sonde à ultrasons (2) et
**en ce que** le périmètre de la feuille (3) qui forme le recouvrement de sonde correspond aux dimensions et à la forme de la surface frontale (9) du boîtier (5) de la sonde à ultrasons (2).

2. Dispositif de sonde (1) selon la revendication 1, **caractérisé en ce que** le recouvrement de sonde (3) est fixé en correspondance de matière sur la sonde à ultrasons (2), en particulier par collage.

3. Dispositif de sonde (1) selon l'une des revendications précédentes, **caractérisé en ce que** le recouvrement de sonde (3) est constitué exclusivement d'un matériau polymère.

4. Dispositif de sonde (1) selon l'une des revendications précédentes, **caractérisé en ce que** le recouvrement de sonde (3) présente une épaisseur comprise dans la plage de 10 µm à 600 µm et de préférence de 50 µm à 200 µm.

5. Dispositif de sonde (1) selon l'une des revendications précédentes, **caractérisé en ce qu'**un écart est formé entre le recouvrement de sonde (3) et l'élément de sonde (4) capable d'osciller de la sonde à ultrasons (2).

6. Dispositif de sonde (1) selon l'une des revendications précédentes, **caractérisé en ce que** la sonde à ultrasons (2) peut être reprise dans une découpe ou un alésage (6) d'une pièce extérieure (7) d'un véhicule de telle sorte que la surface frontale (9) du boîtier (5) coïncide essentiellement à chant avec la section transversale de l'ouverture de la découpe de l'alésage (6).

7. Procédé de montage d'un dispositif de sonde (1) selon l'une des revendications précédentes sur une pièce extérieure (7) d'un véhicule,
**caractérisé en ce que**
dans une première étape, le recouvrement de sonde (3) est fixé sur la sonde à ultrasons (2), en particulier par collage,
**en ce que** dans une deuxième étape, la sonde à ultrasons (2) est montée dans une découpe ou un alésage (6) de la pièce extérieure (7) du véhicule,
**en ce que** le recouvrement de sonde (3) forme une surface au moins essentiellement plane dont le périmètre est adapté au périmètre de la surface frontale (9) du boîtier (5) et qui coïncide essentiellement à chant avec la surface frontale (9) du boîtier (5) de la sonde à ultrasons (2) et
**en ce que** le périmètre de la feuille (3) qui forme le recouvrement de sonde est sélectionné en fonction des dimensions et de la forme de la surface frontale (9) du boîtier (5) de la sonde à ultrasons (2).
